# EUROPEAN PATENT SPECIFICATION

(11) **EP 2 627 184 B1**
(45) Date of publication and mention of the grant of the patent: **04.10.2017**
(21) Application number: 11754469.2
(22) Date of filing: 31.08.2011
(51) Int. Cl.: A21B 3/13, A47J 37/01

(54) **BAKING PAN**
BACKFORM
MOULE

(30) Priority: 02.02.2011 GB 201101798; 09.11.2010 GB 201018915; 14.10.2010 GB 201017347
(43) Date of publication of application: 21.08.2013
(73) Proprietor: WHAT MORE UK LIMITED, Lancashire BB12 7NG (GB)
(72) Inventor: WILKINSON, Ian, Hong Kong (CN)
(74) Representative: Appleyard Lees IP LLP
(86) International application number: PCT/GB2011/051635
(87) International publication number: WO 2012/049467

(56) References cited:
- CH-A- 492 401
- DE-A1- 4 004 951
- DE-U- 1 718 551
- DE-U1- 8 020 612
- DE-U1- 9 218 606
- DE-U1-202004 013 423

## Description

### Field of the Invention

The present invention relates to a baking pan having a detachable part, being a detachable base for use in a baking pan body.

### Background to the Invention

A large variety of baking pans are used for domestic and commercial baking. They are used for baking food such as cakes, bread and the like. Known pans have a number of disadvantages.

Firstly, known pans often have the problem that cooked food sticks within the pan, making it difficult to extract the cooked food in one piece. One traditional solution is to make such baking pans with a loose base that allows upward pressure to the underside of the base to push out the cooked food from the pan. Owing to the base being a loose fit in the pan, the hot contents of the baking pan can seep or drain from where the loose base abuts the body of the baking pan.
Another traditional solution is to make baking pans with a detachable base that is clamped or locked into place by means of a spring clip or latch that is attached to the body of the pan. The clip, or latch, acts as a lever to lock the body of the pan onto the base of the pan for the duration of the baking process and then expand or open the body of the pan after baking is completed to release the cooked food on the base of the pan from the body of the pan. This style of baking pan is commonly called a springform baking pan.

Some styles of springform pans have more complex bases that incorporate a channel around the outer edge of the base, located in such a way as to catch and collect any leakage occurring between the base and the body during the baking or cooking process.

Another solution is to make a one piece baking pan, cut a hole in the base and then place an additional base into the pan covering the hole made in the base. To release the additional base and the cooked food from the pan, the additional base is pushed upwardly through the hole in the base.

However, all baking pans that have a loose or detachable base have the tendency to leak some of the contents of the pan during the cooking or baking process and/or to allow an ingress of water when the pan is immersed in a water bath (as for example when cooking a cheesecake in a Bain Marie).

It is therefore common practice to line baking pans having either a loose or detachable base with a lining material such as greaseproof paper, baking parchment or the like. The lining material covers the joints in the pan to render the interior of the baking pan virtually leak proof. However, it can be a time consuming and fiddly process cutting out the lining material and fitting it to the bottom of the baking pan. Indeed, fitting lining paper is not practical where the shape of the base of the baking pan is more complicated than, for example, a simple circle, square or rectangle.

A further problem with known pans exists because many people like to store cooked food in the original pan. Consequently most manufacturers make some baking pans with lids that are fastened over the top of the baking pan after cooking. However, existing lids trap a lot of air within the pan which aids deterioration of the food. An air gap will occur if the contents of the pan do not completely fill the body of the pan and/or the lid is raised above the body of the pan. Furthermore, existing pans are not effectively sealed to stop the flow of air between the inside and outside of the pan with the lid in place.

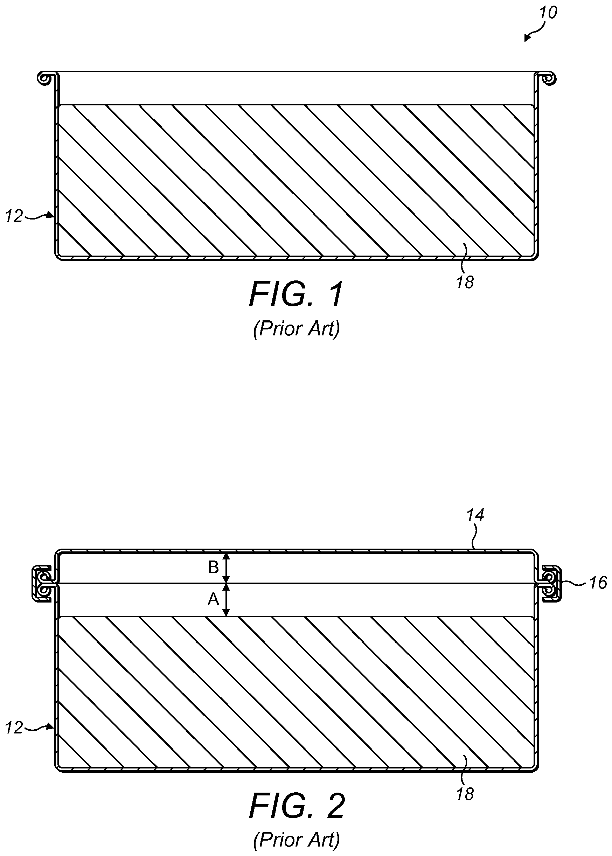

Figures 1 and 2 show a prior art baking pan 10. Figure 1 shows baking pan 10 when used for cooking and Figure 2 shows the baking pan 10 when used for storage. The baking pan 10 has a base 12 and a lid 14. Clips 16 hold the lid 14 in place on the base 12. The baking pan 10 is illustrated with food 18 contained therein. As the food 18 does not completely fill the base 12, a space A is present above the food 18 and within the body of the baking pan 10. A further space B is present within the lid 14. The combined space created by the spaces A and B results in a relatively large quantity of air being enclosed with the food 18.

DE 4004951 A1 and DE 20 2004 013 423 U1 show examples of baking pans.

An object of the present invention is therefore to provide an improved baking pan with a detachable base, a further aim is to provide a detachable base that minimises the egress of food during the cooking or baking process.

Accordingly it is an aim of the present invention is to address at least one disadvantage associated with the prior art whether described herein or elsewhere.

### Summary of the Invention

According to the present invention there is provided a baking pan and a baking pan base as set forth in the appended claims. Other features of the invention will be apparent from the dependent claims, and the description which follows.

According to the exemplary embodiments there is provided a baking pan having a body and a detachable part. The detachable part is base. The body defines an opening between a side wall and, in use, the detachable base is able to be arranged to close the opening. A seal is provided between the detachable base and body to seal the opening when the detachable part is arranged to close the opening. The sealing of the baking pan is improved because the seal is arranged between the sidewall of the body and the detachable base. The sealing is improved because the seal is compressed between the detachable base and side wall which generates a push fit seal. Also, compression of the seal generates a force resisting movement of the detachable base relative to the body. Consequently, the sealing of the detachable base and body is not reliant on the weight of any ingredients or of the detachable part itself, bearing downwards on the seal. Consequently an improved seal is provided. The detachable base is inserted from the top to the bottom, the improved seal arrangement acts as a wiper as it moves downwards, wiping excess grease from the pan. It will be appreciated therefore that the side wall includes at least a portion having constant cross-section so that the seal may be compressed between the sidewall and detachable part at a number of locations.

There is therefore also provided a method of closing an opening in a body of a baking pan using a detachable base having a seal arranged on an edge thereof. Here, the method comprises moving the detachable base from a detached position to a first attached position wherein the seal is compressed between the sidewall of the body and the detachable base. The method may further comprise moving the detachable base from the first attached position to a second attached position wherein the second attached position is spaced from the first position in the direction of the opening.

The present invention includes any combination of the herein referred to features or limitations.

### Brief Description of the Drawings

For a better understanding of the invention, and to show how embodiments of the same may be carried into effect, reference will now be made, by way of example, to the accompanying diagrammatic drawings in which:
Figures 1 and 2 show a cross sectional view of a prior art baking pan without and with the lid respectively;
Figure 3 shows a partial cut-away perspective view of a baking pan according to an exemplary embodiment;
Figure 4 shows a cross sectional view of a baking pan according to a first embodiment of the invention when not fully assembled;
Figure 5 shows a cross sectional view of a baking pan of Figure 4 when fully assembled;
Figure 6 shows a cross sectional view of a baking pan according to a second embodiment.
Figure 7 shows a cross sectional view of a baking pan according to a third embodiment.
Figure 8 shows a cross sectional view through a base suitable for use in any of the baking pans of figures 4 to 7;
Figure 9 shows a cross sectional view through a further base suitable for use in any of the baking pans of figures 4 to 7;
Figure 10 shows a rigid portion of a further base suitable for use with a seal that completely covers the topside of the base such as in figure 9;
Figure 11 a shows a perspective exploded view of a further base suitable for use in any of the baking pans of figures 4 to 7 and Figure 11b shows an exploded cross sectional view of the base of Figure 11 a;
Figure 12 shows a partial cross sectional view through a baking pan showing how a seal is compressed between a body and a rigid portion of the base of a baking pan;
Figure 13 shows a further base suitable for use in any of the baking pans of figures 4 to 7;
Figure 14 shows a cross sectional view of a baking pan according to a fifth embodiment;
Figure 15 is a schematic side view of an exemplary embodiment;
Figure 16 shows an exemplary embodiment of a baking pan.
Figure 17 shows a cross section through Figure 16.
Figure 18 and 19 show alternative exemplary baking pans; and
Figures 20 and 21 show further alternative exemplary bases.

### Description of the Preferred Embodiments

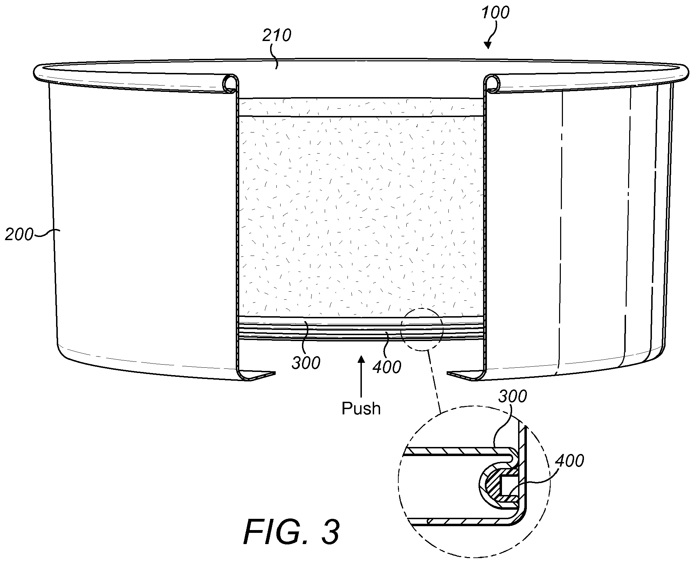

Referring to Figure 3, a baking pan 100 is shown. The baking pan 100 comprises a body 200 and a detachable part 300. The body 200 forms a continuous side wall 210. The detachable part 300 has a rigid portion 310 for closing the continuous wall 210 of the body 200. A seal 400 is arranged between the rigid portion 310 and continuous wall 210 of the body 200. The rigid portion 310 has a front face 312 and a continuous side wall 314. The seal 400 is arranged between the continuous side wall 314 of the rigid portion 310 and the continuous side wall 210 of the body 200. The seal 400 is resilient and sized so as to extend, when uncompressed outside the periphery of the bodies continuous side wall 210. Consequently, when the detachable part 300 is pushed into the body 200, the seal 400 is compressed between the continuous side wall 210 of the body 200 and the continuous side wall 314 of the rigid part 310. Consequently, a push fit is formed. As will be herein described, the detachable part 300 is the base of the baking pan. The seal of the base 300 wipes the sides of the body 200 when inserted and removed. Consequently, the seal 400 acts as a wiper blade to remove excess cooking oil or grease that may have applied to the pan which results in healthier baking. Moreover, the seal provided between the continuous sides of the body and rigid part provides an improved seal which reduces leakage. Also, the seal is not reliant on the weight of the ingredients placed in the pan. Furthermore, when the pan is immersed in water (as for example when cooking a cheesecake over a Bain Marie) the improved seal prevents water ingress.

Various exemplary embodiments will now be described wherein like parts have been given the same references.

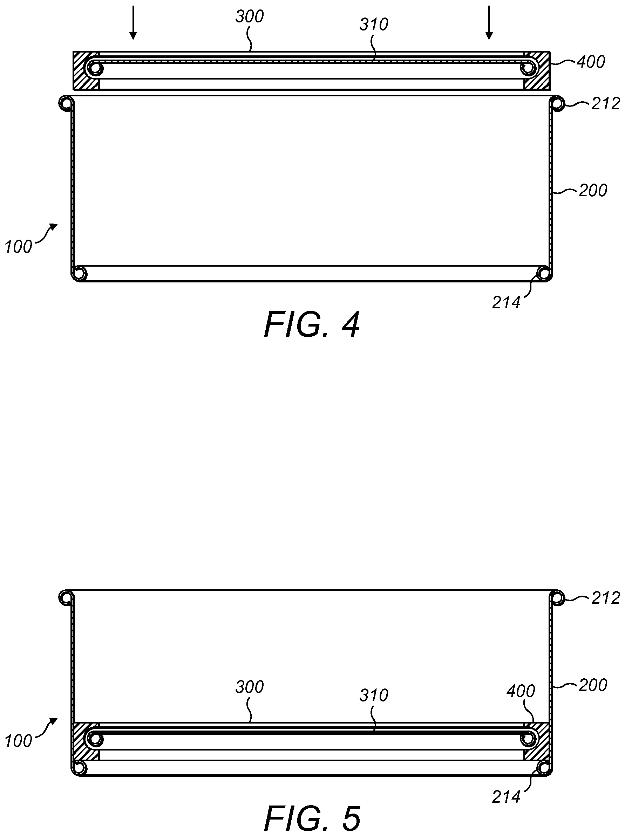

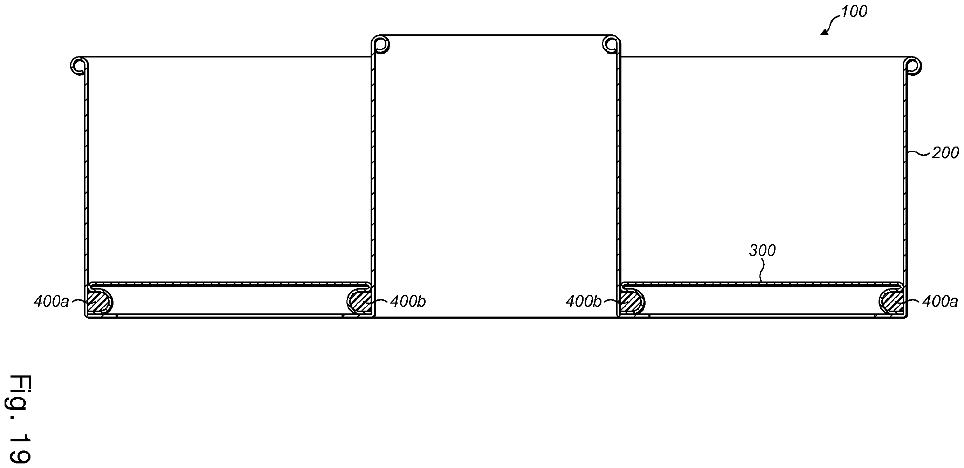

Figures 4 and 5 show a baking pan 100 according to a first exemplary embodiment of the invention. The baking pan comprises a body 200 and a removable part, shown in the exemplary embodiments of Figures 3 to 19 as a base 300. The base 300 is detachable from the body 200.

The body 200 is a single piece of metal formed into a continuous wall 210 in the shape of a circle by conventional means. The continuous wall 210 has an upper edge 212 and a lower edge 214. The upper edge 212 is rolled outwardly of the baking pan 200 and the lower edge 214 is rolled inwardly of the baking pan. The lower edge 214 forms a support for receiving the base 300.

The base 300 is circular in shape to fit in the body 200. The base 300 comprises a rigid portion 310 and a seal 400. The rigid portion 310 is a metal plate. The seal 400 is flexible and heat resistant and is located around the edge of the rigid portion 310. The seal 400 is pre-moulded and stretched over the rigid portion 310. The seal 400 is preferably made of silicone rubber, but may be made of any material having suitable properties.

The seal 400 is such that the base 300 can pushed downwardly into the body 200 to rest on the support 214. The seal 400 also allows the base 300 to be removed from the body 200 by pushing the base 300 upwardly with respect to the body 200. The presence of the seal 400 makes the base 300 slightly larger in diameter than the internal diameter of the body 200. This allows a push fit of the base into the baking pan. When the base 300 is in situ on the support 214, the seal 400 is compressed sufficiently to prevent egress of food from the baking pan 100 during the normal baking or cooking process.

Figure 4 shows how the base 300 is lined up with the body 200 before being pushed into the operation position as shown in Figure 5.

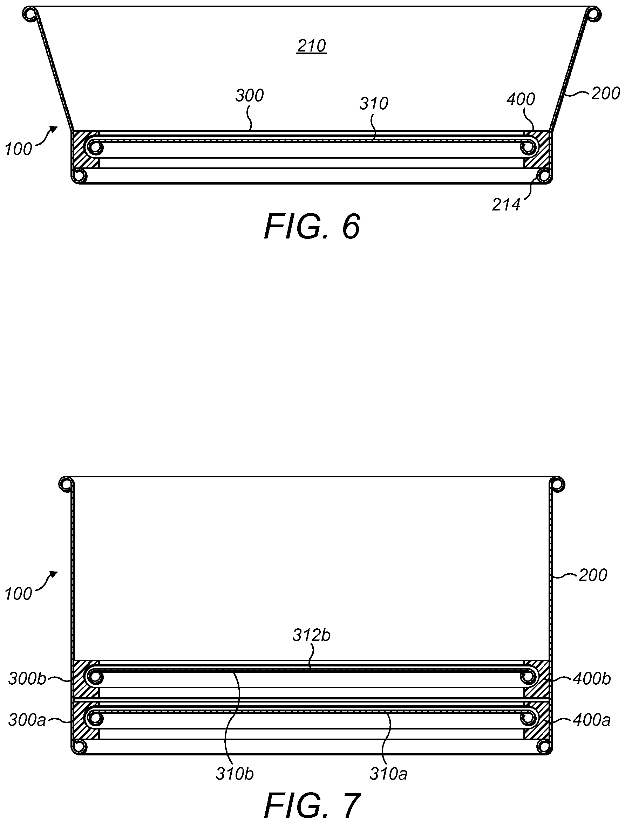

Figure 6 shows a second exemplary embodiment of a baking pan 100. The baking pan 100 comprises a body 200 and a base 300. The base 300 comprises a rigid portion 310 and a seal 400. The baking pan 100 differs from that of Figures 4 and 5 in that the body 200 is not completely vertical. That is, a continuous side 210 of the base 200 does not have a constant diameter. Rather, the continuous side is tapered so as to get narrower towards the support 214. However, a vertical or near vertical section 212 (e.g. a section with constant cross-section) is incorporated in the body 200 to provide a good fit with seal 400.

Figure 7 shows a third exemplary embodiment of a baking pan 100. The baking pan 100 comprises a body 200, and a base 300 comprising a first base 300a. The first base 300a comprises a rigid portion 310a and a seal 400a. Additionally, a second base 300b is provided. The second base 300b comprises a rigid portion 310b and a seal 400b. The second base 300b is the actual cooking surface of the base of the baking pan 210. That is, a front face 312b of the second base provides the surface for receiving cooking ingredients. An air gap between the first base 300a and the second base 300b is formed and acts to insulate the second base 300b and prevent burning of the mixture of ingredients in contact with the front face 312b during the baking or cooking process. Additionally, a layer or insulation material may be placed between the first base 300a and the second base 300b to give even better insulation properties to the whole structure of the base 300. The first base 300a and the second base 300b may be separate items as shown in Figure 7 or formed integrally, with or without insulation in the air gap.

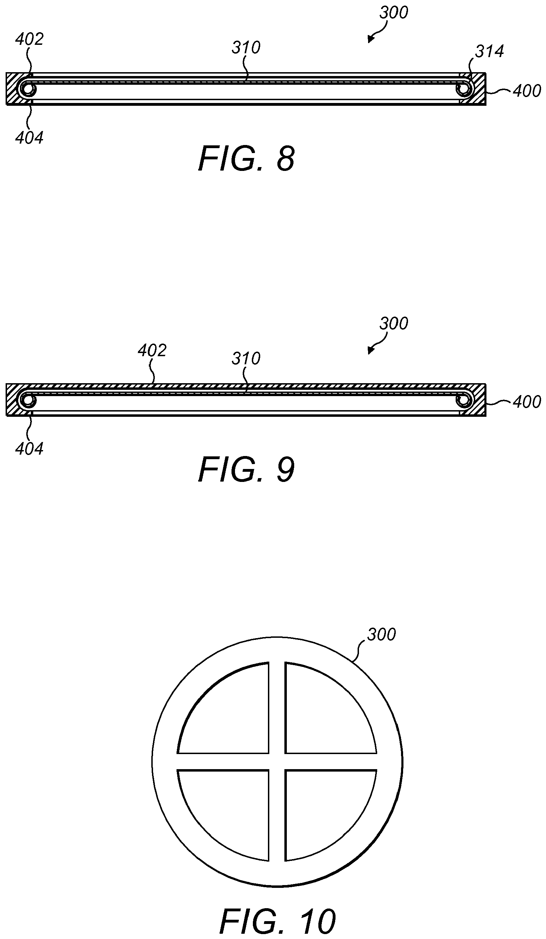

Figure 8 shows a particularly suitable base 300 for use in any of the baking pans of figures 3 to 7. The base 300 comprises a rigid portion 310 and a seal 400. The rigid portion 310 is a metal plate. The seal 400 is flexible and is located around the continuous edge 314 of the rigid portion 310. The seal 400 may be pre-moulded and stretched over the rigid portion 400. Various arrangements of seal 400 are suitable. For instance, in Figure 8, the seal 400 includes top and bottom rims 402, 404 that have a reduced diameter to a seat 406 for receiving the continuous side 312. The top and bottom rims maintain the seal in position when it slides against the base 200. In Figure 9 the top rim is a continuous surface that covers across the top of the base 300. Alternatively the seal 400 could extend over part of the top of the base 300. Alternatively, or additionally the seal 400 could extend under part or all of the bottom of the base 300. The seal 400 may be pre-moulded and stretched over the rigid portion 310.

Figure 10 shows a rigid portion 300 of a further base in the form of a frame. The frame is a stamped frame. However, such frames could also be made by fabrication, for example from wire.

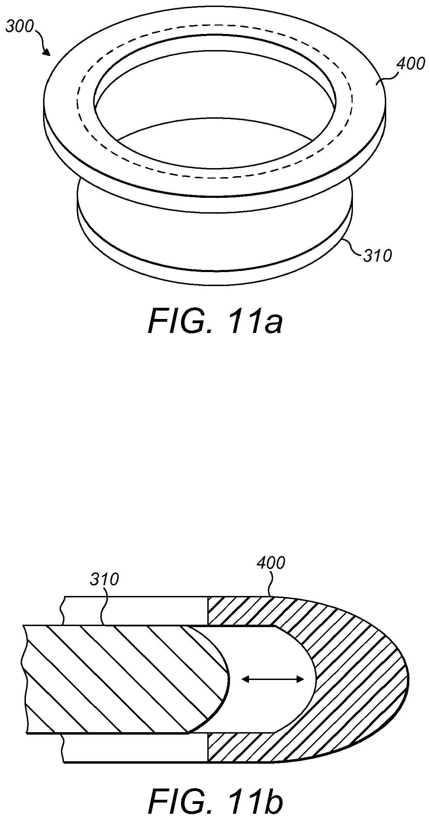

Figures 11 a and 11b show exploded views of a further exemplary base 300. The base 300 comprises a rigid portion 300 and a seal 400. The seal 400 is shaped to capture the rigid portion 300 when it is stretched over or formed around the rigid portion 300.

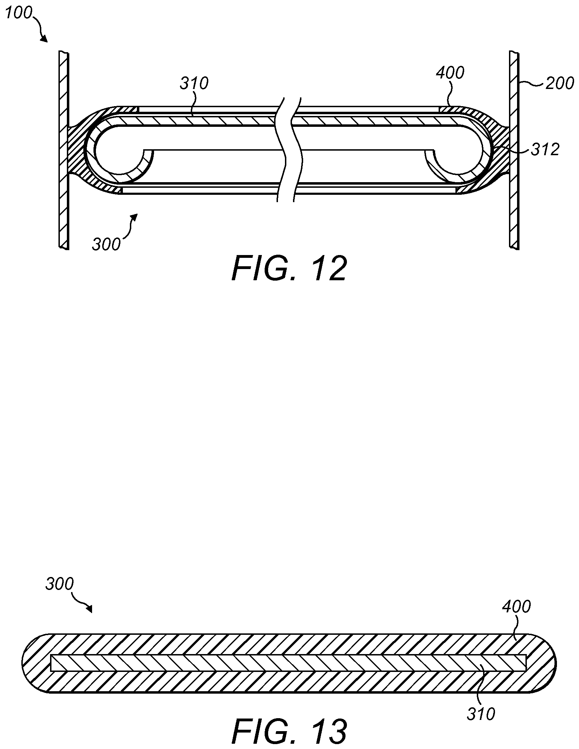

Figure 12 shows a seal 400 compressed between a body 200 of a baking pan 100 and the outer edges of the rigid portion 312 of the base 300 to make a seal.

Figure 13 shows a further exemplary base 300 having a rigid portion 310 in the form of a wire frame. A seal 400 covers the outer edge of the rigid portion 310 and extends across all of the top and bottom of the wire frame to ensure a continuous base through which no cooking material can leak. Alternatively the seal 400 could extend across just the top or the bottom of the frame.

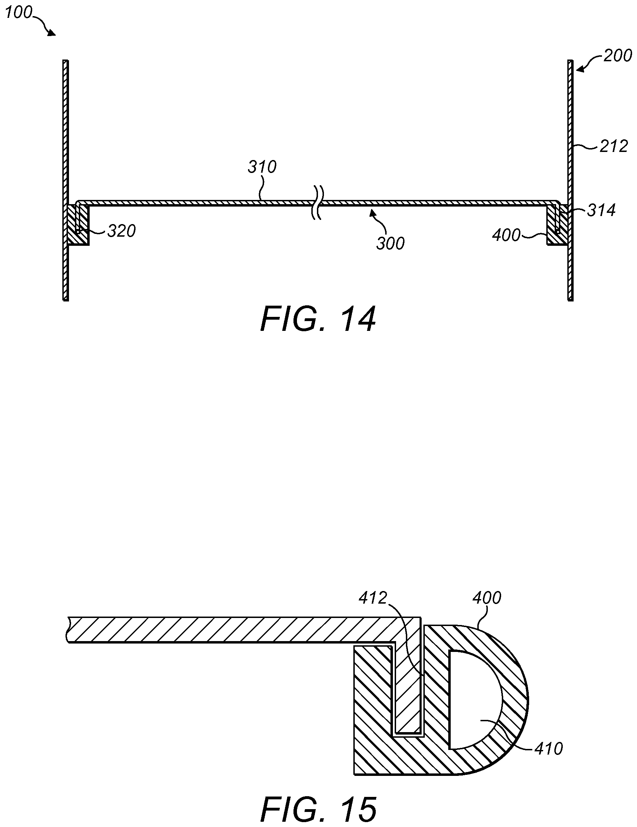

Figure 14 shows a further exemplary embodiment of a baking pan 100 according to the present invention. The baking pan 100 comprises a body 200 and a base 300. The base 300 comprises a rigid portion 310 and a seal 400. The rigid portion 310 has an outer edge portion 314 formed substantially at right angles to the main rigid portion 310 and extending downwardly in use. The seal 400 is located on the outer edge portion 314. The outer edge portion 314 may be provided with a plurality of holes 320 that allow the seal 400 to be attached or moulded through the base 300. The seal 400 is such that, in use, it extends level with, or below, the front face 312 that comes into contact with the food. Because the seal does not extend above the front face 312 this enables the cooked food to be cut into portions after removal from the base 200, but whilst still standing on the base 300, without the knife or other cutting implement making any significant damage to the seal 400.

Figure 15 shows a further exemplary seal arrangement. Here the seal 400 includes a hollow section 410 that improves the compressibility of the seal. The seal may be attached to the base in a similar manner to any of the previous exemplary embodiments. However, in Figure 15, the seal is shown as including a channel 412 for receiving a downwardly bent outer profile 314 of the rigid portion. To promote good adhesion between the seal and rigid portion and to prevent the seal from moving on the rigid portion, it may be glued or over moulded or otherwise attached.

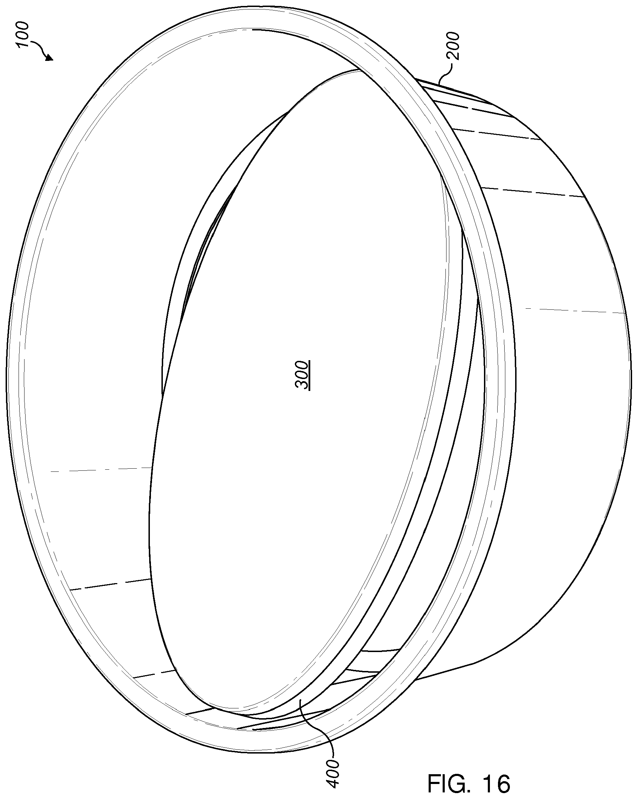

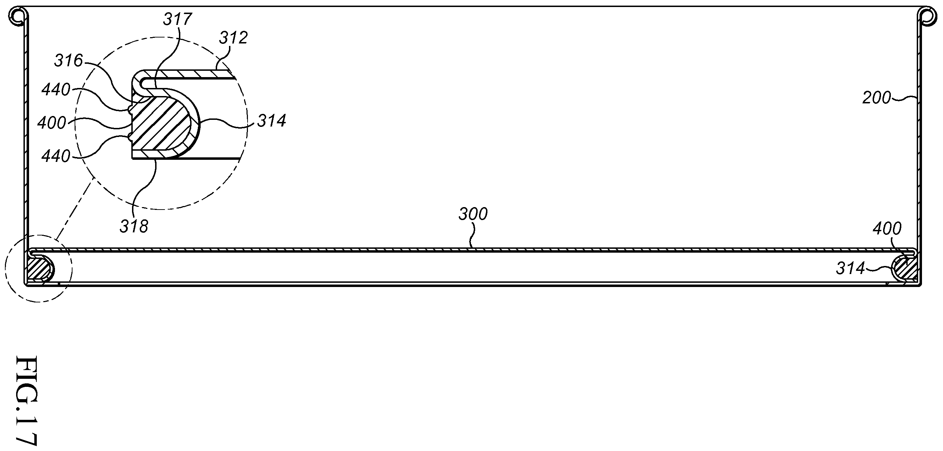

Referring to Figures 16 and 17 a particularly suitable exemplary embodiment is shown. Here the baking pan 100 comprises a body 200 and base 300. A seal 400 is arranged on a continuous side edge of the base 300. As shown in detail in Figure 17, the base 300 includes a substantially flat top surface 312 for receiving cooking ingredients, though, for instance, it may be stamped, moulded or embossed with a decorative form. The continuous side 314 may be formed to include a seat 316 within which the seal 400 sits. The seat 316 is therefore defined by upper and lower portions 317, 318 and these may be formed by forming the rigid portion into a series of bends. The seal 400 is substantially continuous and can be stretched over one of the upper or lower portions 317, 318 so that the seal is replaceable and held tightly in position to prevent movement when sliding against the base. As will be appreciated, the seal 400 is a larger external size than the base 300. Annular rings or flaps 440 may be included to provide the increased size and to improve deformation of the seal.

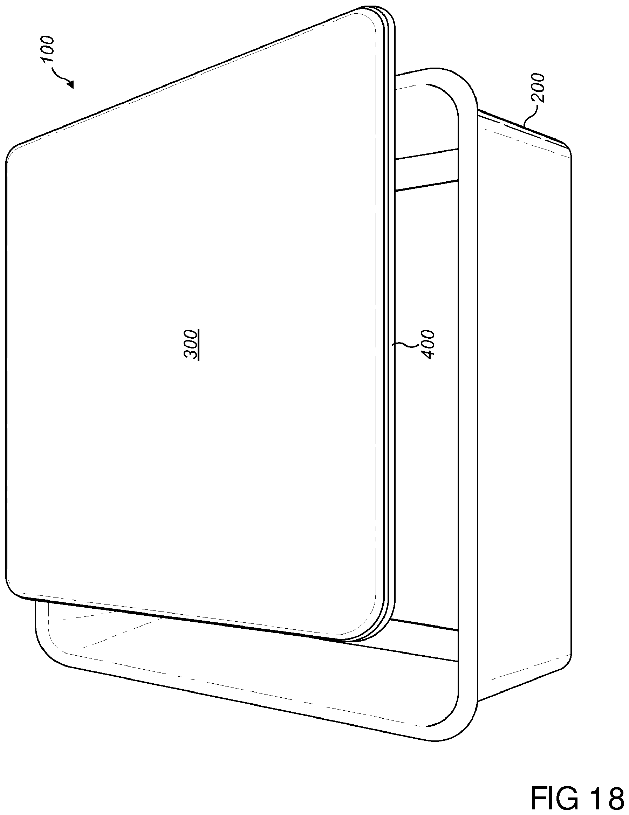

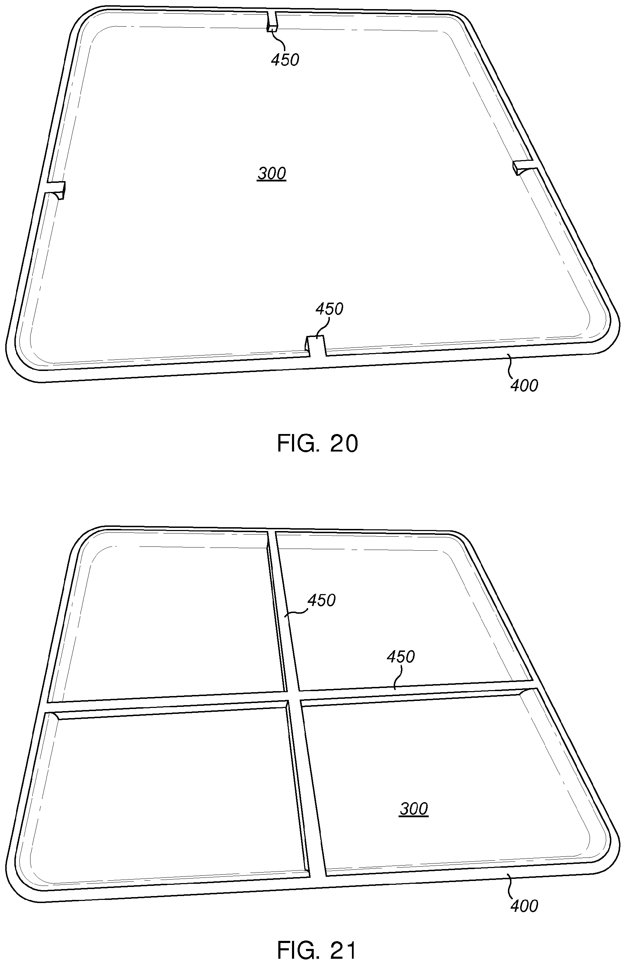

Although the baking pan has been described with reference to a circular baking pan, it may take any suitable shape, which may be a multiple-sided shape such as a square or a star. As an example, Figure 18 shows a square form baking pan 100 having a body 200, base 300 and seal 400 that is arranged on a side of the base. As a further example, Figure shows a ring cake pan wherein the pan includes a central tube so that the ingredients form a ring. Here a first seal is formed on the outside of the base for sealing with the base as herein described. However, in addition, the base includes a hole for receiving the central tube and a second seal 400b is provided to seal against the tube. In the instances of complex shapes, extra securing means may be necessary to prevent the seal from moving relative to the base. The securing means may be adhesive or other means of affixing the seal to the base. However, lugs 450 may be used as shown in Figure 20. The lugs 450 of the seal may co-operate with slots in the base. Additionally or alternatively, as shown in Figure 30 the lugs 450 on opposed sides may be joined. By connecting the lugs 450, tension can be applied to the seal to prevent it from becoming floppy, particularly on long, straight sides.

Some baking pan bodies are formed by stamping and therefore the wall or walls of the body of the pan have no joint or joining. Other baking pan bodies are formed by fabrication where there will be a joint or joints in the vertical plane of the wall or walls of the pan. Where such joints are part of the structure of the baking pan body, they may result in a deformity such as a crack or bulge in the wall or walls. However, with the sealing arrangement of the present invention, the compression ability and/or shaping of the seal provides an effective seal around any such deformity.

The seal is preferably made from silicone rubber, which is very easy to shape or fabricate, but any other suitable material may be used. Silicone rubber can be extruded, injection moulded, compression moulded, liquid injection moulded or calendered. The relative ease with which silicone rubber is moulded and/or formed in the production process allow complex designs such as numbers, letters and various styles of baking pan to be made with detachable bases.

Although the invention has been described with reference pre-moulded seals, the seals may be applied to the rigid portions by other means such as over moulding or injection moulding.

Furthermore the pre-moulded seal is not limited to being stretched over the rigid portion. For example, the seal may comprise one or more sections that are clipped or snapped into locators on the rigid portion.

Providing a baking pan of the type having detachable base, in which the base has an integral seal, means that the user of the baking pan does not need to cut out and line the base with greaseproof paper, baking parchment or the like. This saves the user much time and effort. Furthermore, as the seal is incorporated into the base, the baking pan is still a two-part baking pan as far as the user is concerned. The pan is therefore easy to assemble and clean. The push fit of the base into the body of the baking pan compresses the seal to ensure that no leakage of food occurs during the cooking or baking process.

The seal must be capable of preventing the egress of the food in a baking pan between the base and the body. A baking pan usually holds food in the form of mixtures of baking materials as commonly used in the baking of cakes and confectionery. The seal does not necessarily have to prevent the egress of other materials.

In the embodiments described above, whether the base comprises, the construction is always such that a push fit of the base into the baking pan is made and the seal is compressed between the body and the base of the baking pan.

The support for the detachable base of the baking pan may be formed in any suitable way, either from the body of the baking pan itself or some other device or devices attached to the body of the baking pan.

Although the invention has been described with reference to a rigid portion being in the form of a metal plate, it may also take any other suitable form such as a frame. The frame may be stamped frame or may be made by fabrication, for example from wire. Likewise, the rigid portion could be made from glass or cast metal or any suitable material.

## Claims

1. A baking pan (100) comprising a body (200) and a detachable base (300), wherein the body comprises at least one side wall (210) defining a first opening and the detachable base comprises a rigid portion (310) that is able to be arranged to close the first opening;
the baking pan further comprising a flexible seal (400) attached to the detachable base, the seal being located around an edge of the rigid portion and between the rigid portion and side wall of the body when the detachable base closes the opening, **characterised in that** the presence of the seal makes the detachable base have a larger size than an internal size of the body for providing a push fit in the body such that the seal is configured to wipe the side wall of the body when the detachable base is inserted or removed from the body.

2. A baking pan (100) according to claim 1, wherein the rigid portion (310) comprises a plate.

3. A baking pan (100) according to claim 1, wherein the rigid portion (310) comprises a framework and the seal (400) covers the upper surface and the edge of the framework.

4. A baking pan (100) according to any preceding claim, wherein the seal (400) is pre-moulded and then stretched over the rigid portion (310).

5. A baking pan (100) according to any of claims 1 to 3, wherein the seal (400) is overmoulded on the rigid portion (310).

6. A baking pan (100) according to any of claims 1 to 3, wherein the seal (400) is injection moulded on the rigid portion (310).

7. A baking pan (100) according to any preceding claim, wherein the at least one side wall (210) has a portion of constant cross-section for receiving the detachable base (300).

8. A baking pan (100) according to any of claims 1 to 6, wherein the at least one side wall (210) has a portion of tapered cross-section for receiving the detachable base (300).

9. A method of closing an opening in a body of a baking pan (100) of any of claims 1 to 8 using a detachable base (300) of any of claims 1 to 8 wherein the method comprises:
moving the detachable base from a detached position to a first attached position wherein the seal is compressed between the sidewall of the body and the detachable base **characterised in that** the presence of the seal makes the detachable base have a larger diameter than an internal diameter of the body so that the step of compressing the seal comprises providing a push fit in the body such that the seal wipes the side wall of the body when the detachable base is inserted or removed from the body.

## Patentansprüche

1. Backform (100), umfassend einen Körper (200) und einen herausnehmbaren Boden (300), wobei der Körper mindestens eine Seitenwand (210) umfasst, die eine erste Öffnung definiert, und der herausnehmbare Boden einen starren Abschnitt (310) umfasst, der zum Verschließen der ersten Öffnung angeordnet werden kann;
wobei die Backform ferner eine flexible Dichtung (400) umfasst, die am herausnehmbaren Boden befestigt ist, wobei die Dichtung um einen Rand des starren Abschnitts und zwischen dem starren Abschnitt und der Seitenwand des Körpers angeordnet ist, wenn der herausnehmbare Boden die Öffnung verschließt, **dadurch gekennzeichnet, dass** das Vorhandensein der Dichtung dazu führt, dass die Größe des herausnehmbaren Bodens größer als eine Innengröße des Körpers ist, um eine Steckverbindung im Körper bereitzustellen, so dass die Dichtung ausgelegt ist, über die Seitenwand des Körpers zu streifen, wenn der herausnehmbare Boden in den Körper eingeführt oder daraus entfernt wird.

2. Backform (100) nach Anspruch 1, wobei der starre Abschnitt (310) eine Platte umfasst.

3. Backform (100) nach Anspruch 1, wobei der starre Abschnitt (310) einen Rahmen umfasst und die Dichtung (400) die Oberseite und den Rand des Rahmens bedeckt.

4. Backform (100) nach einem der vorhergehenden Ansprüche, wobei die Dichtung (400) vorgeformt ist und dann über den starren Abschnitt (310) gedehnt wird.

5. Backform (100) nach einem der Ansprüche 1 bis 3, wobei die Dichtung (400) um den starren Abschnitt (310) geformt ist.

6. Backform (100) nach einem der Ansprüche 1 bis 3, wobei die Dichtung (400) durch Spritzgießen auf dem starren Abschnitt (310) angebracht ist.

7. Backform (100) nach einem der vorhergehenden Ansprüche, wobei die mindestens eine Seitenwand (210) einen Abschnitt mit konstanten Querschnitt zur Aufnahme des herausnehmbaren Bodens (300) aufweist.

8. Backform (100) nach einem der Ansprüche 1 bis 6, wobei die mindestens eine Seitenwand (210) einen Abschnitt mit verjüngtem Querschnitt zur Aufnahme des herausnehmbaren Bodens (300) aufweist.

9. Verfahren zum Verschließen einer Öffnung in einem Körper einer Backform (100) nach einem der Ansprüche 1 bis 8 unter Verwendung eines herausnehmbaren Bodens (300) nach einem der Ansprüche 1 bis 8, wobei das Verfahren Folgendes umfasst:
Bewegen des herausnehmbaren Bodens aus einer herausgenommenen Position in eine erste befestigte Position, wobei die Dichtung zwischen der Seitenwand des Körpers und dem herausnehmbaren Boden zusammengepresst wird, **dadurch gekennzeichnet, dass** der herausnehmbare Boden durch das Vorhandensein der Dichtung einen Durchmesser aufweist, der größer als ein Innendurchmesser des Körpers ist, so dass der Schritt des Zusammenpressens der Dichtung die Bereitstellung einer Steckverbindung im Körper umfasst, derart, dass die Dichtung über die Seitenwand des Körpers streift, wenn der herausnehmbare Boden in den Körper eingeführt oder daraus entfernt wird.

## Revendications

1. Moule (100) comprenant un corps (200) et une base détachable (300), dans lequel le corps comprend au moins une paroi latérale (210) qui définit une première ouverture, et la base détachable comprend une partie rigide (310) qui peut être agencée de manière à fermer la première ouverture;
le moule comprenant en outre un joint flexible (400) attaché à la base détachable, le joint étant situé autour d' un bord de la partie rigide et entre la partie rigide et la paroi latérale du corps lorsque la base détachable ferme l'ouverture,
**caractérisé en ce qu'**il résulte de la présence du joint que la taille de la base détachable est plus grande qu'une taille interne du corps de manière à réaliser un ajustement par poussée dans le corps de telle sorte que le joint soit configuré de manière à essuyer la paroi latérale du corps lorsque la base détachable est insérée dans le corps ou enlevée du corps.

2. Moule (100) selon la revendication 1, dans lequel la partie rigide (310) comprend une plaque.

3. Moule (100) selon la revendication 1, dans lequel la partie rigide (310) comprend un cadre, et le joint (400) couvre la surface supérieure et le bord du cadre.

4. Moule (100) selon l'une quelconque des revendications précédentes, dans lequel le joint (400) est pré-moulé et est ensuite étiré sur la partie rigide (310) .

5. Moule (100) selon l'une quelconque des revendications 1 à 3, dans lequel le joint (400) est surmoulé sur la partie rigide (310).

6. Moule (100) selon l'une quelconque des revendications 1 à 3, dans lequel le joint (400) est moulé par injection sur la partie rigide (310).

7. Moule (100) selon l'une quelconque des revendications précédentes, dans lequel ladite au moins une paroi latérale (210) présente une partie de section transversale constante destinée à recevoir la base détachable (300).

8. Moule (100) selon l'une quelconque des revendications 1 à 6, dans lequel ladite au moins une paroi latérale (210) présente une partie de section transversale conique destinée à recevoir la base détachable (300).

9. Procédé de fermeture d'une ouverture dans un corps d'un moule (100) selon l'une quelconque des revendications 1 à 8 en utilisant une base détachable (300) selon l'une quelconque des revendications 1 à 8, dans lequel le procédé comprend le déplacement de la base détachable depuis une position détachée jusqu'à une première position attachée, dans laquelle le joint est comprimé entre la paroi latérale du corps et la base détachable, **caractérisé en ce qu'**il résulte de la présence du joint que le diamètre de la base détachable est plus grand qu'un diamètre interne du corps, de telle sorte que l'étape de compression du joint comprenne la réalisation d'un ajustement par poussée dans le corps, de telle sorte que le joint essuie la paroi latérale du corps lorsque la base détachable est insérée dans le corps ou est enlevée du corps.
